# EUROPÄISCHE PATENTANMELDUNG

(11) **EP 2 561 947 A1**
(43) Veröffentlichungstag der Anmeldung: **27.02.2013**
(21) Anmeldenummer: 11006904.4
(22) Anmeldetag: 24.08.2011
(51) Int. Cl.: B23K 20/12, B23K 37/053, B23K 37/06, H01B 9/06, H02G 5/06

(54) **Vorrichtung und Verfahren zum Fügen durch Reibrührschweissen von rotationssymmetrischen Körpern ; druckgasdichte Anordnung**

(71) Anmelder: Wartmann Technologie AG, 4538 Oberbipp (CH)
(72) Erfinder: Holenweg, Beat, 4522 Rüttensen (CH); Schafer, Jean-Louis, 4632 Trimbach (CH); Schenk, Tobias, 5014 Gretzenbach (CH)
(74) Vertreter: Hannig, Wolf-Dieter

(57) **Zusammenfassung**

Die Erfindung betrifft eine Vorrichtung, ein Verfahren zum Fügen von rotationssymmetrischen Körpern zu einer druckgasdichten Anordnung, beispielsweise Rohr-Rohr-, Flansch-Rohr-, Flansch-Rohr-Flansch-und/oder Flansch-Flansch-Verbindungen aus artgleichen oder artfremden Leichtmetalllegierungen sowie eine druckgasdichte Anordnung hierfür.
Die Schulter (12) des Rührreibschweißwerkzeugs (10) als eine spiralförmig in drei Windungen von der Rotationsachse zum Rand verlaufende Reibfläche und Nuten ausgebildet ist, wobei die Breite der Reibfläche radial nach außen zunächst zunimmt und zum Rand wieder abnimmt sowie die Breite der Nut gleich bleibt, und dass die Rührreibschweißsonde (13) eine über die Sondenhöhe (L) langgestreckt ausgebildete Schnecke (17) mit einer um 10° bis 15° hinterschnittenen Schneide besitzt, wobei die Breite des Schneckenganges konstant ist und das Verhältnis von Schulterdurchmesser zur Sondenlänge >2,0 beträgt, und dass in Flucht der oberhalb der Längsachse durch die Stoßfugen verlaufenden Tangentialebenen ein bei laufender Rotation der Flansch-Rohr-Anordnung anfahr- und abfahrbarer Formkeil vorgesehen ist, um die Rührreibschweißsonde (13) aus der gefügten Stoßfuge herauszubewegen, ohne ein Loch in rührreibgeschweißten Stoßfuge zu hinterlassen.

## Beschreibung

Die Erfindung betrifft eine Vorrichtung zum Fügen von rotationssymmetrischen Körpern zu einer druckgasdichten Anordnung, beispielsweise Rohr-Rohr-, Flansch-Rohr-, Flansch-Rohr-Flansch- oder Flansch-Flansch-Verbindung aus artgleichen oder artfremden Leichtmetalllegierungen, mit direktangetriebenen drehbaren Aufnahmen, zwischen denen die rotationssymmetrischen Körper zueinander nach ihrer Längsachse ausgerichtet sind und im Stumpfstoß aneinander axial eingespannt eine Rotation um ihre Längsachse ausführen, einem rotierenden, mit einer eine Schnecke versehenen Schulter und eine Rührreibschweißsonde aufweisenden Rührreibschweißwerkzeug, das mit Anpresskraft in die Stoßfuge zwischen den rotationssymmetrischen Körpern oberhalb der Längsachse senkrecht eindringt, deren Materialbereiche erweicht, rührt und innerhalb eines Umlaufes der Anordnung diese miteinander verbindet, und einem von einer unter der Stoßfuge angeordneten Gegenhalter zur Aufnahme der Anpresskraft.

Die Erfindung betrifft weiterhin ein Verfahren zum Fügen von rotationssymmetrischen Körpern zu einer druckgasdichten Anordnung, beispielsweise Rohr-Rohr-, Flansch-Rohr-, Flansch-Rohr-Flansch- und/oder Flansch-Flansch-Verbindungen aus artgleichen oder artfremden Leichtmetalllegierungen, bei dem mindestens ein Flansch und ein Rohr, Rohre oder Flansche untereinander im Stumpfstoß an ihren Stirnenden stoffschlüssig verbunden werden, wobei Rohr und Flansch an den Stirnenden zueinander nach ihren Längsachsen fixiert, aneinander axial eingespannt gehalten und in Rotation versetzt werden, zugleich eine Rührreibschweißsonde eines Rührreibschweißwerkzeugs in die Stoßfuge mit Anpresskraft abgesenkt, die Reaktionskraft für die Anpresskraft von einem unter der Stoßfuge zugeordneten Gegenhalter aufgebracht wird, in die Stoßfuge eindringt, deren Materialbereiche plastifiziert, rührt und miteinander verbindet.

Des Weiteren betrifft die Erfindung auch eine druckgasdichte Anordnung aus rotationssymmetrischen Körpern wie Rohr-Rohr-, Flansch-Rohr-, Flansch-Rohr-Flansch- und/oder Flansch-Flansch-Verbindungen aus artgleichen oder artfremden Leichtmetalllegierungen.

### Stand der Technik

Für gasisolierte Übertragungsleitungen (GIS/GIL) im Hochspannungsbereich von 60 kV bis 1100 kV kommen bekanntlich spiralgeschweißte oder stranggepreßte Mantelrohre aus naturharten Aluminiumlegierungen wie AlMg2Mn0.88, AlMg3, AlMg4,5 oder AlMgSi0.5 und an den Stirnenden der Rohre angeschweißte Flansche aus artgleichem Material zum Einsatz, die zu Systemlängen absolut druckdicht zusammengefügt werden und mit einem Isoliergas wie Schwefelhexaflourid (HF₆) oder Mischungen aus HF₆ und Stickstoff unter Druck von 5 bis 10 bar ständig beaufschlagt sind.
Zur Herstellung der druckgasdichten Verbindung der Rohre wird ein automatisiertes Schweißverfahren vor Ort eingesetzt (etz, Heft 1-2, S. 2-6).
Es ist auch bekannt, die Flansche an die Rohre durch Schmelzschweißen zu fügen, das ein sehr hohes Maß an Erfahrungen durch den Schweißer voraussetzt.
Dieses bekannte Verfahren hat den Nachteil, dass an der Fügestelle zwischen Flansch und Rohr zwar die mechanische Eigenschaften beeinträchtigen Oxidschichten durch deren Aufbruch keine Rolle spielen, jedoch die wesentliche höhere Wärmeleitfähigkeit der Fügepartner dazu führt, dass die Wärmeeinflußzone, d.h. das Isothermenfeld um die Schweißstelle, eine erheblich größere Ausdehnung besitzt und trotz der an sich tiefen Schmelztemperatur von Aluminium eine sehr große Wärmemenge eingebracht werden muss. Dies verursacht einen sehr starken Verzug bei paralleler Schweißspalteinstellung, so dass eine entsprechende Nahtvorbereitung und aufwändige Richtvorgänge notwendig werden, um die geforderten Toleranzen einzuhalten. Eine feste Einspannung, wie sie bei diesem bekannten Verfahren Voraussetzung ist, erhöht außerdem die Rissgefahr. Des Weiteren ist dieses bekannte Verfahren immer mit dem Nachteil behaftet, dass Luft- und Gaseinschlüsse in der Schweißnaht nicht ausgeschlossen werden können, die die mechanischen Eigenschaften und die Druckdichtheit der Schweißnaht beeinträchtigen können.

Das Rührreibschweißen ist aus einer Vielzahl von Lösungen für das Verbinden von zwei oder mehr plattenförmigen Bauteilen in Form von Stumpf-, T-, Überlapp- oder Eckstößen (EP 0 615 480 B1, EP 0 752 926 B1, EP 1 324 854 B1) bekannt. Im Bereich druckgasdichter Verbindungen für gasisolierte Übertragungsleitungen im Hochspannungsbereich ist dieses bekannte Verfahren jedoch bisher nicht zum Einsatz gekommen, da infolge der wesentlich geringeren Prozesstemperaturen die zu in der Schweißnaht zu Fehler führenden Oxidschichten nicht zerstört werden, so dass die Dichtheit und die mechanischen Eigenschaften der Verbindung beeinträchtigt werden. Außerdem ist die Notwendigkeit einer festen Einspannung von Flansch und Rohr in ihrem Stirnbereich ein Hindernis für die Anwendung geblieben.

Die aus dem Stand der Technik bekannten Rührreibschweißwerkzeuge, die aus einem Schaft mit Schulter und einem Schweißstift (Pin, Sonde) bestehen, können unterschiedliche Konturen besitzen, beispielsweise kann die Schulter glatt und der Pin keine Kontur (EP 0 752 926 B1, WO 2007/086885A2), die Schulter glatt und der Pin in Form einer Schnecke strukturiert (WO 2007/086885A2), die Schulter glatt und der Pin mit einem Gewinde (EP 1 324 854 B1) oder die Schulter und der Pin mit Abschrägungen (WO 2006/138254 A2) versehen sein.
All diesen bekannten Lösungen ist der Nachteil gemeinsam, dass zwar durch die Strukturierung von Schulter und Pin eine Durchmischung des erweichten Materials bis in die Wurzelzone der plastifizierten Zone erreicht wird, jedoch die vorhandenen sehr harten, spröden und hochschmelzenden Oxidschichten nicht soweit zerkleinert werden, dass sie die Eigenschaften der Verbindungnaht nicht mehr nachteilig beeinflussen können.
Agglomerationen von Aluminiumoxidteilchen in der Schweißnaht führen regelmäßig zur Erhöhung der Bruchgefahr, weil Oxideinschlüsse scharfe Kerben in der Verbindung darstellen und die Rissbildung bei statischer und dynamischer Belastung begünstigen.

### Aufgabenstellung

Bei diesem Stand der Technik liegt der Erfindung die Aufgabe zugrunde, eine druckdichte Verbindung zwischen den Fügepartnern durch eine gezielte mechanische Zerkleinerung der Oxidschichten und deren homogene Verteilung in der plastifizierten Zone beim Stumpfstoß-Verbinden rotationssymmetrischer Körper mittels Rührreibschweißen unter Wegfall von Richtvorgängen, Nacharbeiten zum Glätten der Schweißnahtwurzel bei gleichzeitiger Reduzierung der Fertigungszeiten, der Verringerung der Wärmeeinflusszone und Verbesserung der Schweißnahtqualität unter Einsparung von Material sowie der Erhöhung der Produktivität zu erreichen.

Diese Aufgabe wird durch eine Vorrichtung der eingangs genannten Art mit den Merkmalen des Anspruches 1, durch ein Verfahren mit den Merkmalen des Anspruches 6 und durch eine druckgasdichte Anordnung mit den Merkmalen des Anspruches 10 gelöst.

Vorteilhafte Ausgestaltungen der Vorrichtung und des Verfahrens sind den Unteransprüchen entnehmbar.

Die erfindungsgemäße Lösung geht von der Erkenntnis aus, die Schulter des Werkzeugs als eine spiralförmig in Windungen von der Rotationsachse zum Rand verlaufende Reibfläche und Nuten auszubilden, wobei die Breite der Reibfläche radial nach außen zunächst zunimmt und zum Rand wieder abnimmt sowie die Breite der Nut gleich bleibt, und dass die Rührreibschweißsonde über die Sondenhöhe eine langgestreckte Schnecke mit einer um 2° bis 5° hinterschnittenen Schneide besitzt, wobei die Breite des Ganges konstant ist und das Verhältnis von Schulterdurchmesser zur Sondenlänge >2 beträgt, und dass in Flucht der oberhalb der Längsachse durch die Stoßfuge verlaufenden Tangentialebene ein bei laufender Rotation der Flansch-Rohr-Anordnung anfahr- und abfahrbarer Formkeil vorgesehen ist, um die Rührreibschweißsonde aus der gefügten Stoßfuge herauszubewegen, ohne ein Loch zu hinterlassen. Durch die hinterschnittene Schneide entlang der Schneckenwindungen gelingt es beim Rühren des Materials die vorhandene Aluminiumoxidschicht aufzubrechen, zu zerteilen und gleichmäßig in der plastifizierten Zone zu verteilen. Mit dem Verhältnis von Schulterdurchmesser zur Sondenlänge >2 entsteht der besondere Vorteil, dass die Durchmischung bis in die Nahtwurzel gleichmäßig erfolgt.

In einer besonders bevorzugten Ausführungsform der erfindungsgemäßen Vorrichtung ist die Schneide entlang der Windungen durch Lücken unterbrochen und sind in die Reibflächen der Schulter radial angeordnete Übergangskanäle eingearbeitet, die die Nuten in der Schulter miteinander zum Materialaustausch verbinden.
Dies ist mit dem außerordentlichen Vorteil verbunden, dass auf das plastifizierte Fügematerial in und an den Lücken und Übergangskanälen eine Scherwirkung erzielt wird, die die Aluminiumoxidteilchen weiter zerteilt und homogenisiert.

Eine bevorzugte Ausgestaltungsform der erfindungsgemäßen Vorrichtung sieht vor, dass die Rührreibschweißsonde und der Schaft des Rührreibschweißwerkzeugs aus Warmarbeitsstahl, vorzugsweise X40CrMoV5.1, besteht, der eine gute Zähigkeit, ausreichende Härte und Warmfestigkeit für eine lange Laufzeit mit sich bringt.

In weiterer Ausgestaltung der Erfindung besteht die Leichtmetalllegierung für den rotationssymmetrischen Körper, insbesondere Rohr bzw. Flansch aus einer Aluminiumknetlegierung, vorzugsweise AlMgSi0.5, bzw. aus einer Aluminiumgusslegierung, vorzugsweise AlSi7Mg0.3, wodurch es möglich wird, stranggepresste Rohre mit hochleitfähigen Eigenschaften einzusetzen.

Für eine druckgasdichte Verbindung ist es besonders vorteilhaft, wenn die Rührreibschweißsonde aus der gefügten Stoßfuge herausbewegt wird, ohne ein Loch in der gefügten Stoßnaht zu hinterlassen. Dies wird dadurch erreicht, dass der Formkeil aus einem Material besteht, das werkstoffgleich mit dem des rotationssymmetrischen Körpers ist, so dass keine Nacharbeiten zum Auffüllen des Loches erforderlich sind.

Die Aufgabe wird weiter durch ein Verfahren mit folgenden Schritten gelöst:
a) mehrfaches Scheren des plastifizierten Materials und Zerkleinern der Oxidschicht durch die Lücken in der Schneide und den Ubergangskanälen zwischen den Reibflächen der Schulter unter Einhaltung einer Anpresskraft von 6000 bis 10000 N, einer Rotationsgeschwindigkeit des Werkzeugs von 1000 bis 1800 min⁻¹ und einer Vorschubgeschwindigkeit von 0,3 bis 1 m/min innerhalb einer Umdrehung der Flansch-Rohr-Anordnung um 360°;
b) homogenes Verteilen der Bestandteile der Fügepartner und der zerkleinerten Oxidteilchen innerhalb des plastifizierten Materialbereichs über die Lücken und Übergangskanäle;
c) Anfahren und Andrücken eines an den Durchmesser der rotationssymmetrischen Körper angepassten Formkeils an die rotierende Anordnung in Flucht der durch die oberhalb der Längsachse liegenden Stoßfuge horizontal verlaufenden Tangentialebene, sobald die Anordnung eine Rotation um 350° bis 358°, vorzugsweise 355°, ausgeführt hat, sodann der Formkeil in schleifend angedrückter Lage an der rotierenden Anordnung verbleibt und bei Erreichen einer Winkellage der vorzugsweise 365°, die Rotation der Anordnung gestoppt wird, gleichzeitig das Rührreibschweißwerkzeug mit Rührreibschweißsonde in den Formkeil in Richtung Tangentialebene (y-Richtung) gefahren, das von der Rührreibschweißsonde hinterlassende Loch durch das Material des Formkeils verfüllt und anschließend der Formkeil vcn der Anordnung entfernt wird;
d) Lösen der axialen Einspannung und entnehmen der fertig gefügten Flansch- Rohr-Anordnung.

In einer besonderen Ausführungsform des erfindungsgemäßen Verfahrens wird als Werkstoff für die rotationssymmetrischen Körper, insbesondere Rohr und/oder Flansch, eine Aluminiumknetlegierung, vorzugsweise AlMgSi0.5, eine Aluminiumgusslegierung, vorzugsweise AlSi7Mg0.3, oder eine andere Leichtmetalllegierung, vorzugsweise Knet-Knet-Legierung, verwendet, wodurch es auch möglich wird, stranggepresste Rohre mit hochleitfähigen Eigenschaften einzusetzen.

In weiterer Ausgestaltung des erfindungsgemäßen Verfahrens wird ein Formkeil aus einem Material verwendet, das werkstoffgleich oder -ähnlich mit dem der rotationssymmetrischen Körper ist.

Für eine lange SLandzeit des Rührreibschweißwerkzeugs im erfindungsgemäßen Verfahren hat es sich als zweckmäßig erwiesen, als Werkstoff für das Werkzeug ein Warmarbeitsstahl, vorzugsweise X40CrMoV5.1, zu verwenden wird, so dass keine werkstoffbedingten Beeinträchtigungen der rührreibgeschweißten Stoßfuge von Flansch und Rohr erfolgen können.

Die Aufgabe wird des Weiteren durch eine druckgasdichte Anordnung aus rotationssymmetrischen Körpern gelöst, deren Verbindung miteinander stumpfstoßrührreibgeschweißt ist und die als gasisoliertes Mantelrohr für Übertragungsleitungen im Hochspannungsbereich verwendet wird.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem Ausführungsbeispiel für eine Flansch-Rohr-Flansch-Verbindung näher erläutert werden. Es versteht sich, dass alle weiteren Kombinationen von Verbindungen wie Rohr-Rohr-, Flansch-Flansch- oder Flansch-Rohr-Verbindungen rotationssymmetrischer Körper von der Erfindung erfasst werden.

Es zeigen

Fig. 1a und Fig. 1b eine schematische Darstellung einer Flansch-Rohr-Flansch-Anordnung für ein Mantelrohr einer gasisolierten Übertragungsleitung in Seitenansicht und ein Schnitt entlang der Linie A-A der Fig. 1a,

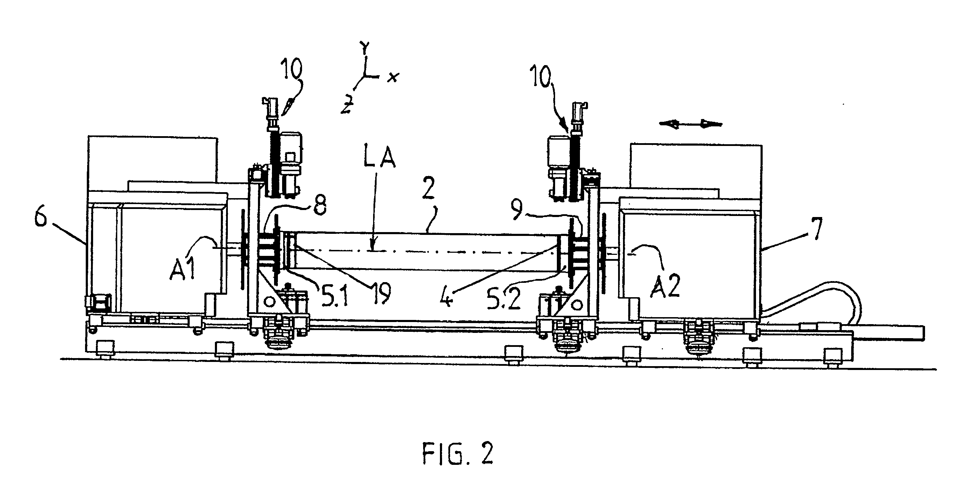

Fig. 2 eine Prinzipdarstellung von drehbaren Flanschaufnahmen, zwischen denen das Rohr axial fest eingespannt ist,

Fig. 3 eine Seitenansicht des Rührreibschweißwerkzeugs,

Fig. 4 einen Schnitt entlang der Linie B-B der Fig. 3,

Fig. 5 eine Draufsicht des Rührreibschweißwerkzeugs mit Übergangskanäle in Nuten,

Fig. 6 eine perspektivische Darstellung des Rührreibschweißwerkzeugs mit in die Schneiden eingearbeiteten Lücken und

Fig. 7 eine Prinzipdarstellung der Einrichtung zum An- und Abfahren des Formkeils an die Flansch-Rohr-Anordnung.

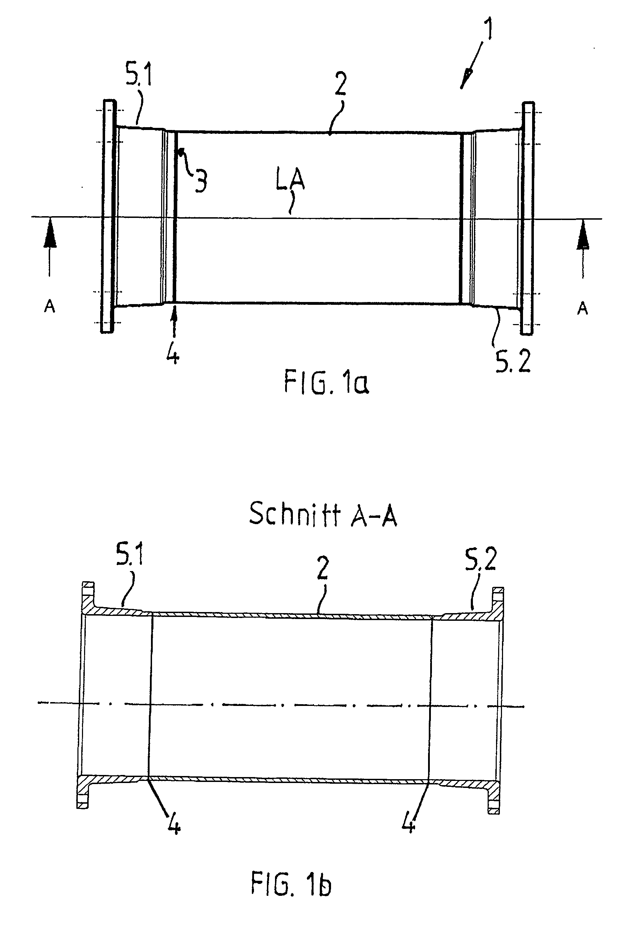

Die Fig. 1 zeigt eine übliche Flansch-Rohr-Flansch-Anordnung 1 eines Mantelrohres für eine gasisolierte Übertragungsleitung, die sich in diesem Beispiel aus einem Rohr 2 aus AlMgSi0.5 (EN-AW6083) und an den Stirnseiten 3 des Rohres im Stumpfstoß 4 angefügten Flansche 5.1, 5.2 aus der Gusslegierung AlSi7Mg0.3 zusammensetzt.
Das Rohr 2 und die Flansche 5.1 bzw. 5.2 haben einen identischen Innendurchmesser. Die Wandstärke von Flansch und Rohr beträgt 7 mm und die Länge des Rohres 8600 mm.

Die für das Rührreibschweißen notwendige fest Einspannung der Flansche 5.1 bzw. 5.2 an den Stirnseiten 3 des Rohres 2 wird mit zwei im Abstand voneinander und in Flucht gegenüber angeordneten Einspanneinheiten 6 und 7 realisiert, von denen die Einspanneinheit 6 ortsfest festgelegt und die Einspanneinheit 7 verfahrbar ist.

Die ortsfeste Einspanneinheit 6, nachfolgend linke Einspanneinheit genannt, besitzt eine Flanschaufnahme 8, welche um eine horizontale Drehachse A1 drehbar und an der der Flansch 5.1 fixiert ist.
Die verfahrbare Einspanneinheit 7, nachfolgend rechte Einspanneinheit genannt, besitzt ebenfalls eine um eine Drehachse A2 drehbare Flanschaufnahme 9, an der der Flansch 5.2 fixiert ist.
Die Drehachse A1 der Flanschaufnahme 8 und die Drehachse A2 der Flanschaufnahme 9 liegen auf einer Flucht sich gegenüber und spannen eine gemeinsame Längsachse LA auf.
Das axiale Einspannen des Rohres 2 zwischen den Flanschen 5.1 und 5.2 wird beim Anfahren der rechten Einspanneinheit 6 gegen das Stirnende des Rohres 2 pneumatisch durchgeführt, wobei die Anpresskraft durch Druckzylinder erzeugt und in Abhängigkeit der Dimensionierung von Rohr und Flansche auf Werte zwischen 5000 bis 8000 N eingestellt wird.
Die Stumpfstöße 4 von Flansch 5.1, Rohr 2 und Flansch 5.2 sind somit für das Rührreibschweißen fest eingespannt. Durch die angetriebenen Flanschaufnahmen 8 und 9 wird die Flansch-Rohr-Flansche-Anordnung in Rotation versetzt.
Jedem Stumpfstoß 4 ist je ein Rührreibschweißwerkzeug 10 zugeordnet, das oberhalb der Längsachse LA in den jeweiligen Stumpfstoß 4 in x-, y- und z-Richtung zustellbar angeordnet ist.
Unterhalb des jeweiligen Stumpfstoßes 4 ist ein spannbarer Gegenhalter 19 angeordnet, der sich an die Innenwandung von Rohr und Flansch formschlüssig anlegt. Der Gegenhalter 19 nimmt die Anpresskraft des Reibrührwerkzeuges 10 von 6000 N bis 10000 N auf.

Charakteristisch für das Rührreibschweißen ist, dass das Fügen unterhalb des Schmelzpunktes der Fügepartner erfolgt. Der grundsätzliche Verfahrensablauf des Rührreibschweißens ist durch den Stand der Technik (EP 0 615 480 B1, EP 0 752 926 B1) bekannt, so dass auf eine weitergehende Darstellung verzichtet werden kann.
Das Werkzeug für das Rührreibschweißen erzeugt durch Reibung die notwendige Prozesstemperatur, rührt das erweichte Material der beiden Fügepartner und verbindet dadurch die beiden Fügepartner.

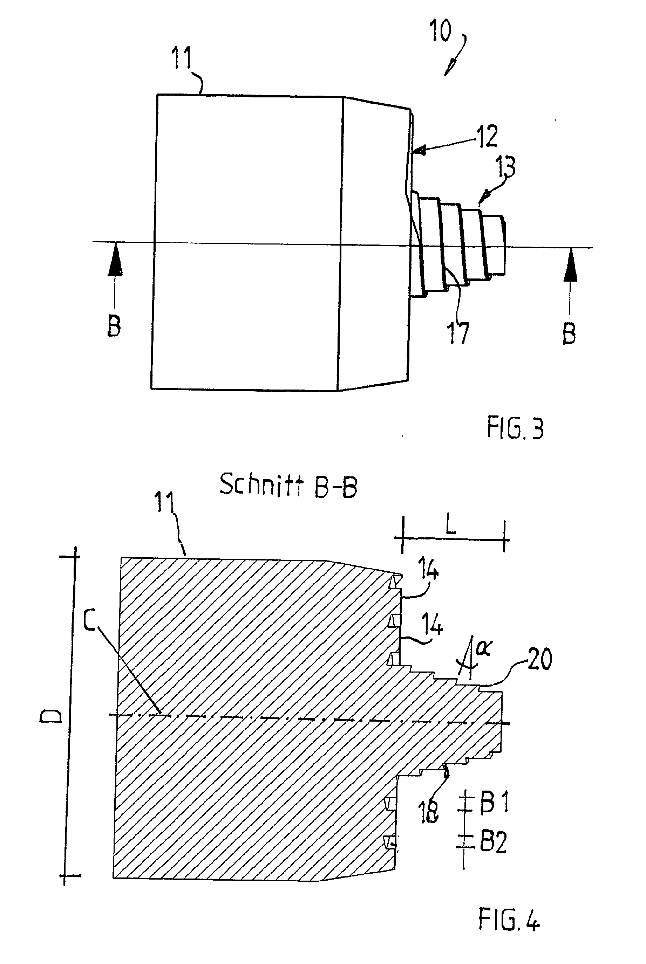

Die Fig. 3 bis 6 zeigen das Rührreibschweißwerkzeug 10. Es umfasst einen zylindrischen Schaft 11 mit einer Schulter 12 und einer konisch ausgebildeten Rührreibschweißsonde 13, die mittig auf der Schulter 12 angeordnet ist. Der Schaft 11 hat einen Durchmesser D von 25 mm und die Rührreibschweißsonde eine Länge L 7 mm, so dass Verhältnis aus dem Durchmesser D des Schulter 12 und der Länge L der Rührreibschweißsonde 13 in diesem Beispiel 3,57 beträgt

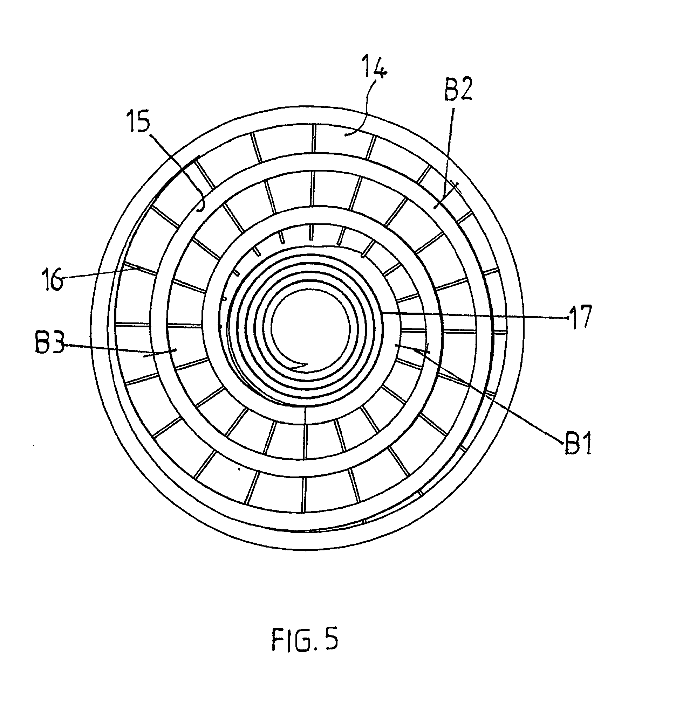

In der Schulter 12 befinden sich Windungen einer spiralförmig ausgebildeten Reibfläche 14, die durch Nuten 15 umschlossen sind. Die Reibfläche 14 verläuft von der Rotationsachse C aus gesehen in zunächst zunehmender Breite B1 radial nach außen und dann in abnehmender Breite B2 zum Rand 15 der Schulter 12 hin. Die Nuten 15 haben dagegen eine gleiche Breite B3. Die Tiefe der Nuten 15 liegt in diesem Beispiel bei 1 mm. In die Reibfläche 14 sind radial nach außen führende Übergangskanäle 16 mit einer Tiefe von 1 mm eingearbeitet, die die Nuten 15 miteinander zum Materialaustausch verbinden (siehe Fig. 4 und 5).
Diese Konfiguration der Schulter 12 in Reibflächen 14, Übergangskanäle 16 und Nuten 15 sorgt dafür, dass das plastifizierte Material nicht aus dem Nahtbereich der Stoßfuge 4 treten kann und sich zugleich ein Scheren der sich im Bereich der Schulter befindlichen Aluminiumoxidteilchen stattfindet und durch die Übergangskanäle 16 ein Materialaustausch zur gleichmäßigen Verteilung der abgescherten Aluminiumoxidteilchen vollziehen kann.

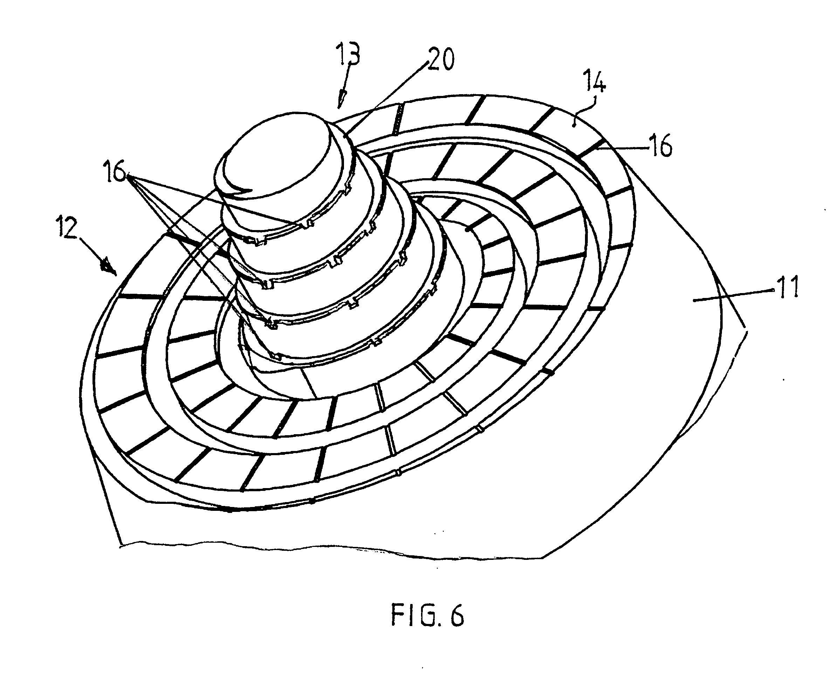

Die mittig in Flucht der Rotationsachse C von der Schulter 12 des Reibrührwerkzeugs 10 aufragende Rührreibschweißsonde 13 weist -wie Fig. 6 zeigt- eine Schnecke 17 aus insgesamt 4 Windungen 18 über die Sondenlänge L auf. Die Windungen 18 haben eine Steigung von 1 und besitzen eine Hinterschneidung α von etwa 10 bis 15°, so dass sich entlang der Windungen 18 eine Schneide 20 ausbildet. An dieser Schneide 20 werden die Aluminiumoxidteilchen aufgeschnitten, mit dem plastifizierten Material vertikal in Richtung der Schweißnahtwurzel transportiert und entsprechend verteilt.
Wie Fig. 6 zeigt, besitzt die Schneide 20 Lücken 21, die entlang der Schneide 20 verteilt angeordnet sind. Das von Schnecke 17 transportierte plastifizierte Material tritt durch die Lücken 21 und wird dort infolge der Rotationsbewegung des Rührreibschweißwerkzeuges 10 geschert, wodurch eine weitere Zerkleinerung der Aluminiumoxidteilchen erreicht wird.

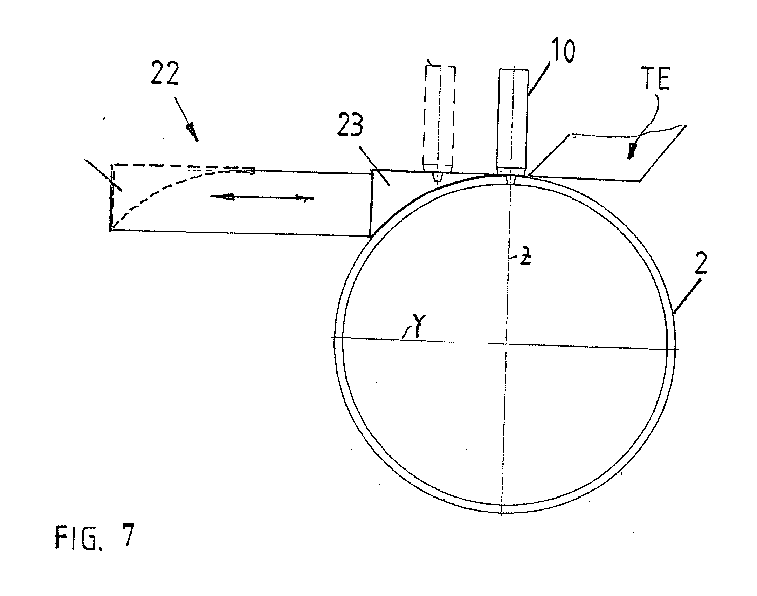

Weiterhin ist jeder Stoßfuge 4 eine Einrichtung 22 zum An- und Abfahren eines Formkeiles 23 in Flucht der horizontal oberhalb der Drehachsen A1 und A2 liegenden, durch die Stoßfugen 4 verlaufenden Tangentialebenen TE zugeordnet (siehe Fig. 7). Das An- und Abfahren des Formkeils 23 erfolgt in Abhängigkeit von der Winkellage der Flansch-Rohr-Flansch-Anordnung 1. Sobald die Flansch-Rohr-Flansch-Anordnung 1 eine vollständige Umdrehung durchgeführt und die Stoßfugen 4 rührreibgeschweißt sind, wird das Rührreibschweißwerkzeug 10 in den Formkeil 23 in Richtung Tangentialebene TE (y-Richtung) ausgefahren, ohne ein Loch in der reibgeschweißten Stoßfuge 4 zu hinterlassen.

Nachfolgend wird der Ablauf des erfindungsgemäßen Verfahrens beschrieben.
Die Flansche 5.1 und 5.2. werden an der drehbaren Flanschaufnahme 8 der linken Einspanneinheit 6 und an der drehbaren Flanschaufnahme 9 der rechten Einspanneinheit 7 so befestigt, dass die Längsachse LA des Rohres 2 mit den Drehachsen A1 und A2 der Flanschaufnahmen 8 bzw. 22 übereinstimmt. Anschließend wird das Rohr 2 zwischen den Flanschen 5.1 und 5.2 durch das Verfahren der rechten Einspanneinheit axial eingespannt, so dass die Stumpfstöße 4 der Stirnenden von Rohr 2 und Flansch 5.1 bzw. 5.2 aneinander fest liegen.
Das erfindungsgemäße Verfahren läuft wie dann wie folgt ab:
a) mehrfaches Scheren des plastifizierten Materials und Zerkleinern der Oxidschicht durch die Lücken in der Schneide und den Übergangskanälen zwischen den Reibflächen der Schulter unter Einhaltung einer Anpresskraft von 6000 bis 10000N, einer Rotationsgeschwindigkeit des Rührreibschweißwerkzeugs von 1000 bis 1800 min⁻¹ und einer Vorschubgeschwindigkeit von 0,3 bis 1 m/min innerhalb einer Umdrehung der Anordnung um 360°;
b) homogenes Verteilen der Bestandteile der Fügepartner und der zerkleinerten Oxidteilchen innerhalb des plastifizierten Materialbereichs zusätzlich über die Lücken und Übergangskanäle;
c) Anfahren und Andrücken eines an den Durchmesser von Rohr 2 und Flansch 5.1, 5.2 angepassten Formkeils 23 an die rotierende Anordnung 1 in Flucht der durch die oberhalb der Längsachse LA liegende Stoßfuge 4 horizontal verlaufenden Tangentialebene TE, sobald die Anordnung 1 eine Rotation um 350° bis 358°, vorzugsweise 355°, ausgeführt hat, sodann der Formkeil 23 in schleifend angedrückter Lage an der rotierenden Anordnung 1 verbleibt und bei Erreichen einer Winkellage der Anordnung 1 von 362° bis 370°, vorzugsweise 365°, die Rotation der Anordnung gestoppt wird, gleichzeitig das Rührreibschweißwerkzeug 10 mit Rührreibschweißsonde 13 in den Formkeil 23 in Richtung Tangentialebene TE (y-Richtung) gefahren, das von der Rührreibschweißsonde 13 hinterlassende Loch durch das Material des Formkeils 23 verfüllt und anschließend der Formkeil 23 von der Anordnung entfernt wird;
d) Lösen der axialen Einspannung und Entnehmen der fertig gefügten Anordnung 1.
Das Besondere des erfindungsgemäßen Verfahren beruht darauf, dass durch eine zusätzliche Scherbehandlung des plastifizierten Materials während der Rotation des Rührreibschweißwerkzeugs eine weitergehende Zerkleinerung der Aluminiumoxidteilchen und somit eine Homogenierung im plastifizierten Materialbereich erreicht wird.
Hierdurch ist gewährleistet, dass Porenbildungen, Fehlstellen und Agglomerationen von Aluminiumoxidteilchen sicher verhindert werden, so dass druckgasdichte Stumpfstoßnähte an rotationssymmetrischen Bauteilen wie Rohre, Flansche u. dgl. in hoher Qualität beherrschbar werden.

Bezugszeichenliste

| | |
|---|---|
| Flansch-Rohr-Flansch-Anordnung | 1 |
| Rohr | 2 |
| Stirnseiten von 2 | 3 |
| Stumpfstöße/ Stoßfugen | 4 |
| Flansche | 5.1, 5.2 |
| Linke (crtsfeste) Einspanneinheit | 6 |
| Rechte (verfahrbare) Einspanneinheit | 7 |
| Flanschaufnahme an 6 | 8 |
| Flanschaufnahme an 7 | 9 |
| Rührreibschweißwerkzeug | 10 |
| Schaft von 10 | 11 |
| Schulter von 10 | 12 |
| Rührreibschweißsonde (Stift/Pin) von 10 | 13 |
| Reibflächen auf 10 | 14 |
| Nuten | 15 |
| Übergangskanäle | 16 |
| Schnecke | 17 |
| Windungen | 18 |
| Gegenhalter | 19 |
| Schneide | 20 |
| Lücken in 20 | 21 |
| Einrichtung zum An- und Abfahren des Formkeils | 22 |
| Formkeil | 23 |
| Drehachsen der Flanschaufnahmen | A1, A2 |
| Breite der Reibfläche 14 | B1, B2 |
| Breite der Nut | B3 |
| Rotationsachse von 10 | C |
| Durchmesser der Schulter | D |
| Sondenlänge | L |
| Längsachse Rohr | LA |
| Tangentialebene | TE |
| Hinterschneidung | α |
| Raumrichtung | x, y, z |

## Patentansprüche

1. Vorrichtung zum Fügen von rotationssymmetrischen Körpern zu einer druckgasdichten Anordnung, beispielsweise Rohr-Rohr-, Flansch-Rohr-, Flansch-Rohr-Flansch- und/oder Flansch-Flansch-Verbindung aus artgleichen oder artfremden Leichtmetalllegierungen, mit direktangetriebenen drehbaren Aufnahmen (8,9), zwischen denen die rotationssymmetrischen Körper (2, 5.1, 5.2) zueinander nach ihrer Längsachse (LA) ausgerichtet sind und im Stumpfstoß (4) aneinander axial eingespannt eine Rotation um ihre Längsachse (LA) ausführen, einem rotierenden, mit einer eine Schnecke (17) versehenen Schulter (12) und eine Rührreibschweißsonde (13) aufweisenden Rührreibschweißwerkzeug (10), das mit Anpresskraft in die Stoßfuge (4) zwischen den rotationssymmetrischen Körpern oberhalb der Längsachse (LA) senkrecht eindringt, deren Materialbereiche erweicht, rührt und innerhalb eines Umlaufes der Anordnung (1) diese miteinander verbindet, und einem von einer unter der Stoßfuge (4) angeordneten Gegenhalter (19) zur Aufnahme der Anpresskraft, **dadurch gekennzeichnet, dass** die Schulter (13) als eine spiralförmig in Windungen von der Rotationsachse (R) zum Rand verlaufende Reibfläche (14) und Nuten (15) ausgebildet ist, wobei die Breite der Reibfläche (14) radial nach außen zunächst zunimmt und zum Rand wieder abnimmt sowie die Breite der Nut (15) gleich bleibt, und dass die Rührreibschweißsonde (13) eine über die Sondenhöhe (L) langgestreckte Schnecke (17) mit einer um 10° bis 15° hinterschnittenen Schneide (20) besitzt, wobei die Breite des Schneckenganges konstant ist und das Verhältnis von Schulterdurchmesser (D) zur Sondenlänge (L) >2,0 beträgt, und dass in Flucht der oberhalb der Längsachse (LA) durch die Stoßfugen (4) verlaufenden Tangentialebenen (TE) ein bei laufender Rotation der Anordnung (1) anfahr- und abfahrbarer Formkeil (23) vorgesehen ist, um die Rührreibschweißsonde (13) aus der gefügten Stoßfuge (4) herauszubewegen, ohne ein Loch in der rührreibgeschweißten Stoßfuge zu hinterlassen.

2. Vorrichtung nach Anspruch 1, **dadurch gekenzeichnet**, dass die Schneide (20) durch Lücken (21) unterbrochen ist und in die Reibfläche (14) der Schulter (12) radial angeordnete Übergangskanäle (16) eingearbeitet sind, die die in der Schulter (12) angeordneten Nuten (15) miteinander zum Materialaustausch verbinden.

3. Vorrichtung nach Anspruch 1, **dadurch gekennzeichnet, dass** die Rührreibschweißsonde (13) und der Schaft (11) aus Warmarbeitsstahl, vorzugsweise X40CrMoV5.1, besteht.

4. Vorrichtung nach Anspruch 1, **dadurch gekennzeichnet, dass** der Werkstoff für die rotationssymmetrischen Körper, insbesondere Rohr und/oder Flansch, aus einer Aluminiumknetlegierung, vorzugsweise AlMgSi0.5, einer Aluminiumgusslegierung, vorzugsweise AlSi/Mg0.3, oder aus eine anderen Leichtmetalllegierung, vorzugsweise Knet-Knet-Legierung, besteht.

5. Vorrichtung nach Anspruch 1, **dadurch gekennzeichnet, dass** der Formkeil (23) aus einem Material besteht, das werkstoffgleich oder -ähnlich mit dem der rotationssymmetrischen Körper ist.

6. Verfahren zum Fügen von rotationssymmetrischen Körpern zu einer druckgasdichten Anordnung, beispielsweise Rohr-Rohr-, Flansch-Rohr-, Flansch-Rohr-Flansch-und/oder Flansch-Flansch-Verbindungen aus artgleichen oder artfremden Leichtmetalllegierungen, bei dem mindestens ein Flansch (5.1 oder 5.2) und ein Rohr (2), Rohre (2) oder die Flansche (5.1, 5.2) untereinander im Stumpfstoß (4) an ihren Stirnenden (3) stoffschlüssig verbunden werden, wobei Rohr (2) und Flansch (5.1, 5.2) an den Stirnenden (3) zueinander nach ihren Längsachsen fixiert, aneinander axial eingespannt gehalten und in Rotation versetzt werden, zugleich eine Rührreibschweißsonde (13) eines Rührreibschweißwerkzeugs (10) in die Stoßfuge (4) mit Anpresskraft abgesenkt, die Reaktionskraft für die Anpresskraft von einem unter der Stoßfuge (4) zugeordneten Gegenhalter (19) aufgebracht wird, in die Stoßfuge (4) eindringt, deren Materialbereiche plastifiziert, rührt und miteinander verbindet, **gekennzeichnet durch** folgende Schritte:
a) mehrfaches Scheren des plastifizierten Materials und Zerkleinern der Oxidschicht **durch** die Lücken in der Schneide und den Übergangskanälen zwischen den Reibflächen der Schulter unter Einhaltung einer Anpresskraft von 6000 bis 10000 N, einer Rotationsgeschwindigkeit des Werkzeugs von 1000 bis 1800 min⁻¹ und einer Vorschubgeschwindigkeit von 0,3 bis 1 m/min innerhalb einer Umdrehung der Anordnung (1) um 360°;
b) homogenes Verteilen der Bestandteile der Fügepartner und der zerkleinerten Oxidteilchen innerhalb des plastifizierten Materialbereichs über die Lücken und Übergangskanäle;
c) Anfahren und Andrücken eines an den Durchmesser der rotationssymmetrischen Körper (2, 5.1, 5.2) angepassten Formkeils (23) an die rotierende Anordnung (1) in Flucht der **durch** die oberhalb der Längsachse LA liegenden Stoßfuge (4) horizontal verlaufenden Tangentialebene TE, sobald die Anordnung (1) eine Rotation um 350° bis 358°, vorzugsweise 355°, ausgeführt hat, sodann der Formkeil (23) in schleifend angedrückter Lage an der rotierenden Anordnung (1) verbleibt und bei Erreichen einer Winkellage von 362 bis 370o, vorzugsweise 365°, die Rotation der Anordnung (1) gestoppt wird, gle4ichzeitig das Rührreibschweißwerkzeug (10) mit Rührreibschweißsonde (13) in den Formkeil (23) in Richtung Tangentialebene TE (y-Richtung) gefahren, das von der Rührreibschweißsonde (13) hinterlassende Loch **durch** das Material des Formkeils (23) verfüllt und anschließend der Formkeil (23) von der Anordnung entfernt wird;
d) Lösen der axialen Einspannung und Entnehmen der fertig gefügten Anordnung.

7. Verfahren nach Anspruch 6, **dadurch gekennzeichnet, dass** als Werkstoff für die rotationssymmetrischen Körper, insbesondere Rohr und/oder Flansch, eine Aluminiumknetlegierung, vorzugsweise AlMgSi0.5, eine Aluminiumgusslegierung, vorzugsweise AlSi7Mg0.3, oder eine andere Leichtmetalllegierung, vorzugsweise Kent-Knet-Legierung, verwendet wird.

8. Verfahren nach Anspruch 6, **dadurch gekennzeichnet, dass** als Werkstoff für den Formkeil ein Material verwendet wird, das werkstoffgleich oder -ähnlich mit dem der rotationssymmetrischen Körper ist.

9. Verfahren nach Anspruch 6, **dadurch gekennzeichnet, dass** als Werkstoff für das Rührreibschweißwerkzeug ein Warmarbeitsstahl, vorzugsweise X40CrMoV5.1, verwendet wird.

10. Druckgasdichte Anordnung aus rotationssymmetrischen Körpern, beispielsweise Rohr-Rohr-, Flansch-Rohr-, Flansch-Rohr-Flansch- oder Flansch-Flansch-Verbindung aus artgleichen oder artfremden Leichtmetalllegierungen, **dadurch gekennzeichnet, dass** die Verbindung zwischen den rotationssymmetrischen Körpern stumpfstoßrührreibgeschweißt ist und die Anordnung als gasisoliertes Mantelrohr für Übertragungsleitungen im Hochspannungsbereich verwendet wird.

11. Druckgasdichte Anordnung nach Anspruch 10, **dadurch gekennzeichnet, dass** der Werkstoff für die rotationssymmetrischen Körper, insbesondere Rohr und/oder Flansch, aus einer Aluminiumknetlegierung, vorzugsweise AlMgSi0.5, bzw. aus einer Aluminiumgusslegierung, vorzugsweise AlSi7Mg0.3, oder eine andere Leichtmetalllegierung, vorzugsweise Knet-Knet-Legierung, besteht.
